# EUROPÄISCHE PATENTANMELDUNG

(11) **EP 2 656 721 A1**
(43) Veröffentlichungstag der Anmeldung: **30.10.2013**
(21) Anmeldenummer: 13153186.5
(22) Anmeldetag: 30.01.2013
(51) Int. Cl.: A01D 34/00

(54) **Reinigungsvorrichtung für Rasenmäher**

(30) Priorität: 27.04.2012 AT 5003412 U
(71) Anmelder: Neuco GmbH, 8410 Neudorf/Wildon (AT)
(72) Erfinder:
(74) Vertreter: Schwarz & Partner

(57) **Zusammenfassung**

Die Erfindung betrifft eine Vorrichtung (1) zur Reinigung eines Rasenmähers, umfassend eine Reinigungswanne (2) zum Abstellen des Rasenmähers, wobei an einer Wannenoberseite (4) Ausströmöffnungen (7) für ein Reinigungsmittel (10) angeordnet sind. Die Ausströmöffnungen (7) sind mit einer in die Reinigungswanne (2) integrierten Reinigungsmittelkammer (6) an einer Wannenunterseite (5) verbunden.

## Beschreibung

Die Erfindung betrifft eine Vorrichtung zur Reinigung eines Rasenmähers, umfassend eine Reinigungswanne zum Abstellen des Rasenmähers, wobei an einer Wannenoberseite Ausströmöffnungen für ein Reinigungsmittel angeordnet sind.

Es hat sich bewährt, Rasenmäher direkt nach jedem Mäheinsatz jeweils gründlich vom anhaftenden Grünschnitt zu reinigen. Unter dem Begriff eines Rasenmähers sind im folgenden prinzipiell sämtliche aus dem Stand der Technik bekannte Rasenmähertypen umfasst, insbesondere mit Elektro- oder Benzinmotoren betriebene Rasenmäher mit Rollen, Walzen oder Luftkissen sowie bekannte Rasenmähertraktoren, auf denen der Fahrer während des Mähens sitzen kann.

Meist wird zur Reinigung der Rasenmäher nach Gebrauch zur Seite gekippt und die Verunreinigungen und Ablagerungen an seiner Unterseite mit einem Wasserschlauch abgespritzt. Durch das Entfernen von Grünschnitt insbesondere im Messerraum des Rasenmähers wird verhindert, dass die Schnittflächen der Messerwerkzeuge während der Standzeiten des Rasenmähers, also zwischen den Mäheinsätzen, korrodieren und stumpf werden. Durch eine regelmäßige Reinigung wird somit nicht nur die Lebensdauer des Rasenmähers erhöht, sondern auch eine Verschlechterung des Schnittbildes beim Mähen verhindert.

Weiters wird durch die regelmäßige Reinigung im Anschluss an den jeweiligen Mäheinsatz verhindert, dass der am Rasenmäher anhaftende Grünschnitt eintrocknet und so hart wird, dass dieser nur mehr mechanisch mit meist beträchtlichem Aufwand entfernt werden kann. Eine solche mechanische Reinigung des Messerraums ist allerdings sehr gefährlich und kann insbesondere bei motorbetriebenen Rasenmähern, die nicht ausreichend vor versehentlicher Inbetriebnahme des Antriebs geschützt sind, zu schweren Verletzungen führen. Als Werkzeuge zur mechanischen Reinigung werden meist Schaber, Messer, Klingen oder Drahtbürsten eingesetzt. Diese Werkzeuge haben jedoch den Nachteil, dass dadurch das Gehäuse des Rasenmähers zerkratzt bzw. beschädigt wird.

Nachteilig an den bisher gebräuchlichen Reinigungsmethoden ist, dass sowohl bei der Naßreinigung durch Abspritzen mit einem Wasserschlauch, als auch bei der mechanischen Trockenreinigung jeweils der Rasenmäher mühsam zur Seite gekippt und in dieser gekippten Lage gesichert werden muss. Weiters ist bei der Naßreinigung von Nachteil, dass durch den Leitungsdruck des Wasserschlauches der Grünschnitt in einem größeren Radius um den Reinigungsort verteilt wird und die Reinigungsperson durch feuchten Grünschnitt und umherspritzendes Wasser verschmutzt wird. Insbesondere für ältere, gebrechliche Personen ist eine regelmäßige Reinigung des Rasenmähers daher mit den herkömmlichen Reinigungsmethoden kaum durchzuführen.

Aus dem Stand der Technik ist beispielsweise aus dem Dokument US 3,856,028 eine Reinigungsvorrichtung für Rasenmäher bekannt. Dabei wird ein zu reinigender Rasenmäher auf eine Plattform aus Holz, Kunststoff oder Metall gestellt, welche im Bereich des Mähermessers eine kreisförmige Öffnung aufweist. Am Rand dieser Öffnung ist umlaufend ein ringförmig angeordneter Schlauch befestigt, welcher an seiner Oberseite mehrere Schlauchöffnungen aufweist. Der ringförmige Schlauch wird dazu an eine Wasserleitung angeschlossen, wodurch Wasser durch die Schlauchöffnungen nach oben an die Unterseite des verschmutzten Rasenmähers gelangt. Nachteilig an dieser Ausführung ist zumindest, dass die Schlauchöffnungen nur entlang des ringförmigen Schlauchs angeordnet sind, weshalb eine gleichmäßige und gründliche Reinigung des gesamten Messerbereichs eines Rasenmähers mit dieser Reinigungsvorrichtung nicht möglich ist. Auch bei einer langen Verweildauer des Rasenmähers auf der Reinigungsvorrichtung können hartnäckig anhaftende Verunreinigungen im Bereich des Mähermessers nur unvollständig gereinigt werden. Eine zusätzliche händische bzw. mechanische Reinigung ist somit dennoch erforderlich, um einen Rasenmäher nach Gebrauch gründlich reinigen zu können.

Die Erfindung bezweckt, die Nachteile des Stands der Technik zu überwinden und dazu eine Reinigungsvorrichtung für Rasenmäher zu schaffen, mit der eine regelmäßige sowie rasche Reinigung des Rasenmähers besonders komfortabel, ohne Kraftanstrengung sowie ohne Verschmutzung der Reinigungsperson erfolgt.

Diese Aufgaben werden von einer Reinigungsvorrichtung gemäß dem Oberbegriff von Anspruch 1 mit den Merkmalen des kennzeichnenden Teils von Anspruch 1 gelöst. Die abhängigen Ansprüche betreffen weitere besonders vorteilhafte Ausführungsvarianten der Erfindung.

Bei einer erfindungsgemäßen Vorrichtung zur Reinigung eines Rasenmähers, umfassend eine Reinigungswanne zum Abstellen des Rasenmähers, wobei an einer Wannenoberseite Ausströmöffnungen für ein Reinigungsmittel angeordnet sind, sind die Auströmöffnungen mit einer in die Reinigungswanne integrierten Reinigungsmittelkammer an einer Wannenunterseite verbunden. Eine solche Reinigungsvorrichtung bietet zahlreiche Vorteile: Nach Gebrauch des Rasenmähers wird dieser in die Reinigungswanne der Vorrichtung, an deren Wannenoberseite Ausströmöffnungen vorgesehen sind, gestellt. Die Ausströmöffnungen sind an der Wannenoberseite bevorzugt so positioniert, dass sie im Wesentlichen einer Kontur des Rasenmähers, insbesondere einer Kontur des Messerraums des zu reinigenden Rasenmähers, entsprechen. Durch die Ausströmöffnungen hindurch kann Reinigungsmittel, beispielsweise Wasser, von der Wannenunterseite nach oben an die Unterseite des Rasenmähers gespritzt werden. An der Rasenmäherunterseite anhaftender Grünschnitt wird dadurch gelockert und abgespült und gelangt in die Reinigungswanne. Nach abgeschlossener Reinigung kann der nasse Grünschnitt aus der Reinigungswanne einfach entnommen und entsorgt werden.

Die Ausströmöffnungen sind dabei mit einer in die Reinigungswanne integrierten Reinigungsmittelkammer, welche an einer Wannenunterseite angeordnet ist, verbunden. Ein Reinigungsmittel, das mit Druck in die Reinigungsmittelkammer eingebracht wird, gelangt somit über die Ausströmöffnungen verteilt an die Wannenoberseite bzw. tritt aus der Reinigungsmittelkammer durch die Ausströmöffnungen nach oben aus. Durch die mit Reinigungsmittel befüllte Reinigungsmittelkammer, die wie ein Reinigungsmittelpuffer wirkt, wird - vergleichbar mit einem Brausekopf einer Dusche - ein besonders gleichmäßiger Strahl des nach oben austretenden Reinigungsmittels gewährleistet.

Zweckmäßig ist bei einer erfindungsgemäßen Reinigungsvorrichtung die Reinigungsmittelkammer mit einem Reinigungsmittelanschluss verbunden. Als Reinigungsmittelanschluss wird beispielsweise ein Schlauchanschluss bzw. Adapter für einen Gartenwasserschlauch vorgesehen. Somit kann die Reinigungsvorrichtung bei angeschlossenem Wasserschlauch über längere Zeit selbsttätig in Betrieb sein. Dabei gelangt Wasser als Reinigungsmittel in die Reinigungsmittelkammer und von dort nach oben durch die Ausströmöffnungen hindurch an die Unterseite des zu reinigenden Rasenmähers, der sich in der Reinigungswanne befindet. Abhängig vom eingestellten Druck des Reinigungsmittels bzw. abhängig von der Reinigungsdauer lassen sich somit auch hartnäckige Ablagerungen an der Unterseite des Rasenmähers komfortabel und ohne Kraftanstrengung reinigen. Anstelle von klarem Wasser als Reinigungsmittel ist es auch denkbar, beispielsweise ein Reinigungsmittel enthaltend einen Spülmittelzusatz zu verwenden.

Besonders komfortabel steht bei einer erfindungsgemäßen Reinigungsvorrichtung der Reinigungsmittelanschluss seitlich an der Reinigungswanne hervor. Somit ist es besonders einfach, die Reinigungsvorrichtung an einen Gartenwasserschlauch zu koppeln bzw. auch wieder vom Gartenwasserschlauch zu entkoppeln.

In einer ersten bevorzugten Ausführungsvariante der Erfindung sind bei einer Reinigungsvorrichtung die Ausströmöffnungen an der Wannenoberseite im Wesentlichen linienförmig, vorzugsweise kreisförmig, angeordnet. In dieser Ausführung weisen die Ausströmöffnungen beispielsweise die Umrisskontur des Messerraums des Rasenmähers auf.

In einer nächsten bevorzugten Ausführungsvariante der Erfindung sind bei einer Reinigungsvorrichtung die Ausströmöffnungen in konzentrischen Kreisen an der Wannenoberseite angeordnet. In dieser Ausführung weisen die Ausströmöffnungen beispielsweise die Kontur des Messerraums des darüber abgestellten Rasenmähers auf und reichen bis in die Mitte des Messerraums etwa in den Bereich der Messerachse des Rasenmähers.

In einer weiteren bevorzugten Ausführungsvariante der Erfindung sind bei einer Reinigungsvorrichtung die Ausströmöffnungen an zumindest einem Flächenabschnitt der Wannenoberseite angeordnet. In dieser Ausführung sind die Ausströmöffnungen beispielsweise gleichmäßig über die Fläche der Kontur des Messerraums des darüber abgestellten Rasenmähers verteilt.

Vorteilhaft sind bei einer erfindungsgemäßen Reinigungsvorrichtung die Ausströmöffnungen jeweils mit einer Ausströmdüse, vorzugsweise jeweils mit einer innenliegenden Ausströmdüse, ausgestattet. In dieser Asuführung weist jede Ausströmöffnung an der Wannenoberseite eine Ausströmdüse auf. Derartige Ausströmdüsen sind im Wesentlichen mit den Düsen an einem Brausekopf vergleichbar und haben den Vorteil, dass die Austrittsgeschwindigkeit des Reinigungsmittels bzw. von Wasser in den Ausströmdüsen erhöht wird. Somit wird eine besonders gründliche Reinigung eines Rasenmähers bei vergleichsweise geringem Reinigungsmittelverbrauch erzielt. Die Ausströmdüsen sind vorzugsweise innerhalb der Reinigungswanne bzw. innerhalb der Ausströmöffnungen angeordnet, wodurch eine Beschädigung oder Verschmutzung der Ausströmdüsen vermieden wird.

Zweckmäßig ist bei einer Reinigungsvorrichtung gemäß der Erfindung an der Wannenoberseite der Reinigungswanne zumindest an einem Seitenrand, bevorzugt an zumindest zwei gegenüberliegenden Seitenrändern, jeweils eine Begrenzungsrandleiste vorgesehen. Die Begrenzungsrandleisten verhindern, dass der Rasenmäher von der Reinigungsvorrichtung seitlich abrutscht. Insbesondere bei schweren Rasenmähertraktoren ist dies wichtig, um nicht bei der Reinigung umstehende Personen durch einen von der Vorrichtung abrutschenden Rasenmäher zu gefährden. Weiters wird in dieser Ausführung durch die Begrenzungsrandleisten während der Reinigung zuverlässig eine Verunreinigung durch seitlich unter dem Rasenmäher herausspritzendes Wasser bzw. durch seitlich austretenden Grünschnitt verhindert. Durch die Begrenzungsrandleisten werden während der Reinigung Wasser und Grünschnitt in der Reinigungswanne gesammelt bzw. können diese die Reinigungswanne nur an den Seiten ohne Begrenzungsrandleisten verlassen. Im Rahmen der Erfindung sind unterschiedliche Ausführungsformen denkbar: beispielsweise können bei einer rechteckigen Vorrichtung Begrenzungsrandleisten an den beiden Längsseiten, an den beiden Längsseiten sowie an einer Schmalseite, oder auch an sämtlichen Seitenrändern der Vorrichtung vorgesehen sein.

Von Vorteil ist bei einer erfindungsgemäßen Reinigungsvorrichtung zumindest ein Seitenrand der Reinigungswanne mit einer Abschrägung versehen. Durch eine Abschrägung an zumindest einem Seitenrand wird erleichtert, den Rasenmäher zur Reinigung auf die Vorrichtung bzw. in die Reinigungswanne zu schieben.

Besonders vorteilhaft liegen in einer weiteren erfindungsgemäßen Ausführung der Reinigungsvorrichtung die Wannenoberseite und die Wannenunterseite abschnittsweise aneinander an. Diese Abschnitte, an denen die Wannenoberseite und die Wannenunterseite aneinander anliegen, dienen der Verstärkung der Reinigungsvorrichtung. Durch diese Verquetschungen bzw. Versteifungen, welche stegartig angeordnet sein können, wird ermöglicht, dass auch hohe Lasten auf einer erfindungsgemäßen Reinigungsvorrichtung abgestellt werden können, wie dies beispielsweise bei Sitzrasenmähern bzw. Sitzrasentraktoren der Fall ist.

In einer weiteren vorteilhaften Ausführungsvariante der Erfindung sind bei einer Reinigungsvorrichtung die Wannenoberseite und die Wannenunterseite in den Abschnitten, in denen sie aneinander anliegen, miteinander verbunden. Diese verquetschten Abschnitte, an denen die Wannenoberseite und die Wannenunterseite miteinander verbunden sind, dienen als besonders robuste Verstärkungsrippen. Ein Verformen oder Verwinden der Reinigungsvorrichtung wird durch diese Verstärkungsrippen zuverlässig vermieden.

In einer Weiterbildung der Erfindung ist bei einer Reinigungsvorrichtung an der Wannenoberseite zumindest eine Ablaufrinne vorgesehen. Eine solche Ablaufrinne dient dazu, dass während des Reinigungsvorgangs Rückstände des gemähten Grases besonders einfach von der Wannenoberseite abgewaschen werden können.

Besonders vorteilhaft beträgt bei einer erfindungsgemäßen Reinigungsvorrichtung eine Wannenhöhe der Reinigungswanne höchstens 50 mm, vorzugsweise höchstens 15 mm. Somit lässt sich die flache Reinigungsvorrichtung besonders platzsparend und einfach bei Nichtgebrauch verstauen.

Zweckmäßig ist eine erfindungsgemäße Reinigungsvorrichtung aus einem oder mehreren der folgenden Materialien hergestellt: Kunststoff, insbesondere Polyethylen (PE)-Kunststoff, faserverstärkter Kunststoff, insbesondere Glasfaserverstärktes Polyesterharz, Metall, Verbundwerkstoff. Je nach Größe und Gewicht des zu reinigenden Rasenmähers empfiehlt es sich, zur Reinigung schwerer Rasenmähertraktoren eine Reinigungsvorrichtung aus einem besonders robusten Material, beispielsweise aus Metall oder glasfaserverstärktem Polyesterharz, zu verwenden. Vorteilhaft ist die Reinigungsvorrichtung mit planen, glatten Oberflächen ausgestattet, welche besonders leicht zu reinigen sind.

Weitere Einzelheiten, Merkmale und Vorteile der Erfindung ergeben sich aus der nachfolgenden Erläuterung eines in der Zeichnung schematisch dargestellten Ausführungsbeispiels. In den Zeichnungen zeigen:
- Fig. 1 in einer Draufsicht eine erfindungsgemäße Vorrichtung;
- Fig. 2 in einer Seitenansicht die in Fig. 1 dargestellte Vorrichtung;
- Fig. 3 in einer Schnittansicht gemäß der in Fig. 1 eingezeichneten Schnittebene A-A die Vorrichtung von der Seite;
- Fig. 4 in einer Seitenansicht eine weitere Ausführungsform einer erfindungsgemäßen Vorrichtung;
- Fig. 5 in einer Untersicht die Wannenunterseite der in Fig. 4 gezeigten Vorrichtung;
- Fig. 6 in einer Schnittansicht von der Seite die Reinigungswanne gemäß der in Fig. 5 eingezeichneten Schnittebene B-B;
- Fig. 7 das in Fig. 6 markierte Detail C in einer vergrößerten Schnittansicht,
- Fig. 8 in einer Draufsicht eine weitere Ausführungsvariante einer erfindungsgemäßen Vorrichtung;
- Fig. 9 in einer Schnittansicht von der Seite die Vorrichtung gemäß der in Fig. 8 eingezeichneten Schnittebene C-C.

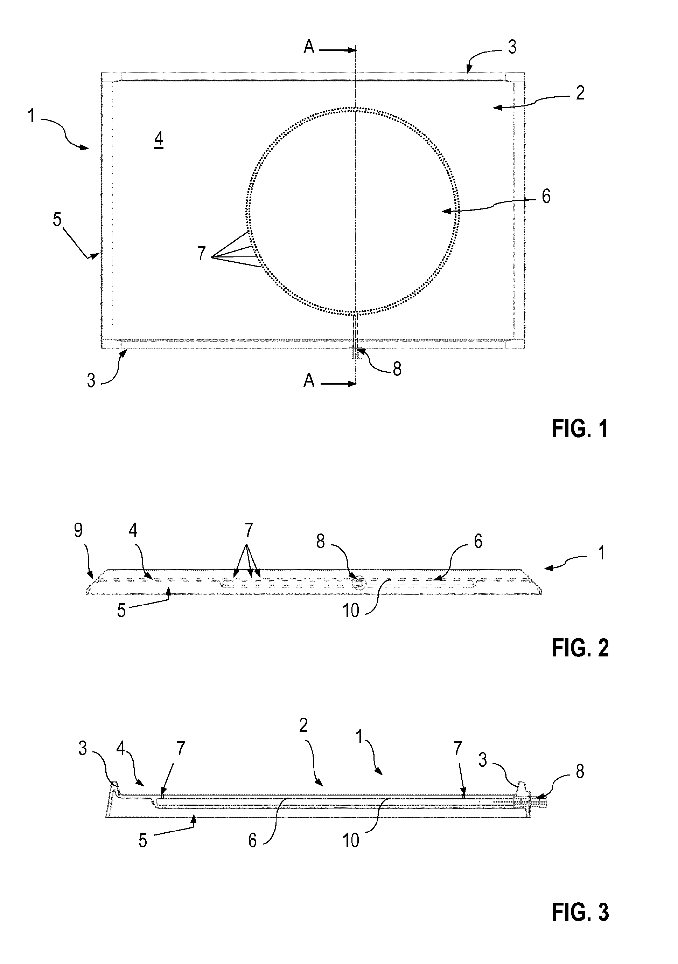

Fig. 1 stellt eine Reinigungsvorrichtung 1 mit einer im Wesentlichen rechteckförmigen Reinigungswanne 2 dar. An den beiden gegenüberliegenden Längsseiten der Reinigungswanne 2 sind seitliche Begrenzungsrandleisten 3 als Spritzschutz vorgesehen. Ein zu reinigender Rasenmäher wird hier zwischen den Begrenzungsrandleisten 3 in die Reinigungswanne 2 geschoben, wobei die Unterseite des nicht dargestellten Rasenmähers von einer Wannenoberseite 4 im Wesentlichen gleichmäßig beabstandet ist. An einer Wannenunterseite 5, also an der dem Rasenmäher abgewandten Seite der Reinigungswanne 2, befindet sich eine Reinigungsmittelkammer 6, die nach oben zur Wannenoberseite 4 mit Ausströmöffnungen 7 verbunden ist. Die Reinigungsmittelkammer 6 ist mit einem seitlichen Reinigungsmittelanschluss 8 versehen. Beispielsweise kann ein Gartenwasserschlauch mittels eines an sich bekannten Adapters an den Reinigungsmittelanschluss 8 lösbar gekoppelt werden. Die Ausströmöffnungen 7 sind hier an der Wannenoberseite 4 etwa kreisförmig angeordnet und entsprechen im Wesentlichen der Umrisskontur des Messerraums eines Rasenmähers.

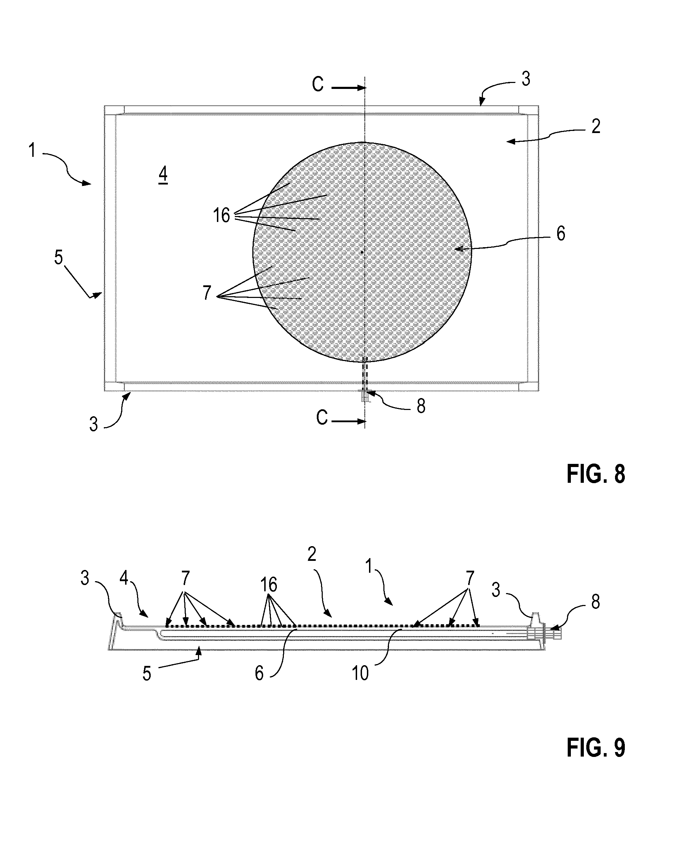

Ebenso ist es im Rahmen der Erfindung denkbar, dass Ausströmöffnungen 7 in vollflächig über einen Flächenabschnitt der Wannenoberseite 4 verteilt sind. Dies ist beispielsweise in Fig. 8 dargestellt. Weiters ist es denkbar und vom Rahmen der Erfindung mit umfasst, dass Ausströmöffnungen 7 in mehreren linienförmigen Abschnitten, beispielsweise entlang konzentrischer Kreislinien, an der Wannenoberseite 4 verteilt sind. Diese Ausführungen sind in die Abbildungen nicht explizit dargestellt.

Fig. 2 zeigt in einer Seitenansicht die in Fig. 1 dargestellte Vorrichtung 1. Seitlich sind an den Schmalseiten der rechteckigen Reinigungswanne 2 jeweils Abschrägungen 9 zu entnehmen. Diese Abschrägungen 9 dienen dazu, den zu reinigenden Rasenmäher bequem und ohne Kraftanstrengung seitlich auf die Reinigungswanne 2 schieben zu können. Nach erfolgter Reinigung lässt sich der Rasenmäher an der gegenüberliegenden Schmalseite einfach über die Abschrägung 9 wieder von der Vorrichtung 1 hinunterrollen. Die entlang der Längsseiten vorgesehenen Begrenzungsrandleisten 3 verhindern zuverlässig, dass Grünschnitt beim Reinigen seitlich unter dem Rasenmäher herausspritzt. Weiters wird durch die Begrenzungsrandleisten 3 zuverlässig ein seitliches Verrutschen des Rasenmähers während der Reinigung verhindert. In Fig. 2 sind die Reinigungsmittelkammer 6 mit dem darin befindlichen Reinigungsmittel 10, beispielsweise Wasser, sowie der Reinigungsmittelanschluss 8 jeweils strichliert eingezeichnet.

Fig. 3 zeigt in einer Schnittansicht gemäß der in Fig. 1 eingezeichneten Schnittebene A-A die Vorrichtung 1 mit der innenliegenden Reinigungsmittelkammer 6 sowie dem Reinigungsmittelanschluss 8 von der Seite.

Die hier gezeigte Reinigungsvorrichtung 1 ist aus Polyethylen (PE)-Kunststoff hergestellt. Ebenso ist es denkbar, erfindungsgemäße Reinigungsvorrichtungen 1 auch aus anderen Materialien herzustellen, beispielsweise aus einem faserverstärkter Kunststoff, insbesondere aus Glasfaserverstärktem Polyesterharz, aus Metall oder aus einem Verbundwerkstoff. Diese Ausführungen werden in den Abbildungen nicht explizit dargestellt.

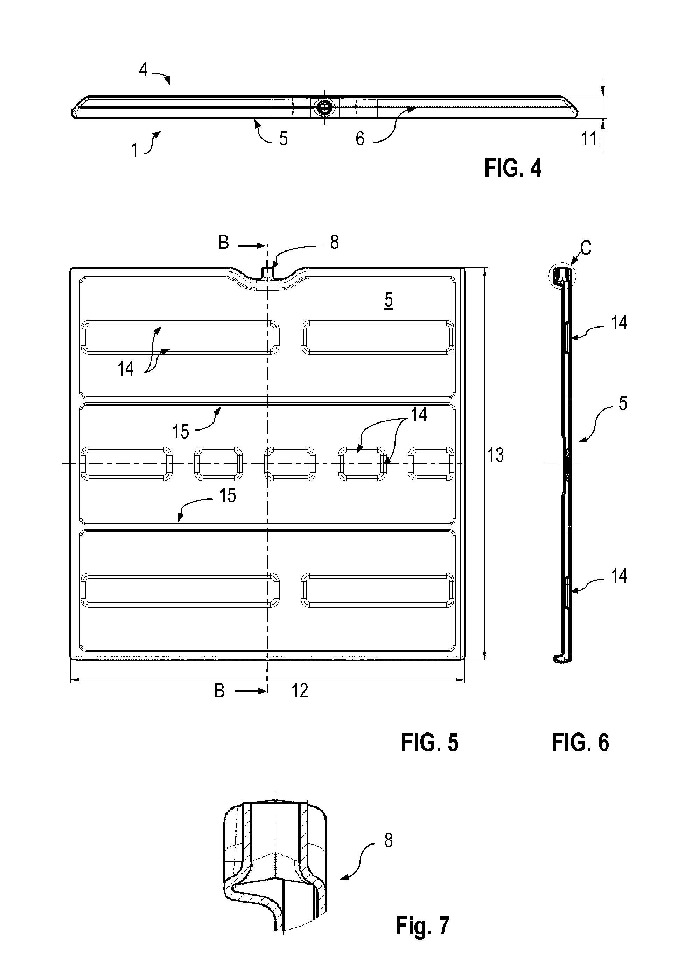

Fig. 4 zeigt in einer Seitenansicht eine weitere Ausführungsform einer erfindungsgemäßen Reinigungsvorrichtung 1 in einer sehr flachen Bauweise. Die Reinigungswanne 2 weist hier eine sehr geringe Wannenhöhe 11 von beispielsweise 30 mm auf. Die Reinigungswanne 2 ist beispielsweise aus einem Wannenoberteil und einem Wannenunterteil, welche an den Schmalseiten entlang deren Seitenränder miteinander verbunden sind, hergestellt. Die beiden Wannenteile sind beispielsweise flüssigkeitsdicht miteinander verklebt. Das Wannenoberteil bildet dabei die Wannenoberseite 4, während das Wannenunterteil die Wannenunterseite 5 bildet. Innerhalb der Reinigungswanne 2 befindet sich eine Reinigungsmittelkammer 6, welche mittels eines Reinigungsmittelanschlusses 8 befüllt werden kann und Ausströmöffnungen 7 zur Wannenoberseite 4 aufweist, welche beispielsweise innerhalb eines im Wesentlichen kreisförmigen Abschnitts der Wannenoberseite 4 gleichmäßig verteilt angeordnet sind.

Fig. 5 veranschaulicht in einer Untersicht das Wannenunterteil mit der Wannenunterseite 5. Das Wannenunterteil weist eine Wannenlänge 12 und eine Wannenbreite 13 auf. Weiters sind an der Wannenunterseite 5 mehrere Verstärkungsrippen 14 angeordnet, die zur Versteifung des Wannenunterteils dienen. Im Bereich der Verstärkungsrippen 14 sind das Wannenoberteil und das Wannenunterteil bzw. die Wannenoberseite 4 und die Wannenunterseite 5 beispielsweise durch Verquetschen miteinander verbunden. Somit ist aufgrund der Verstärkungsrippen 14 gewährleistet, dass auch schwere Rasenmäher, beispielsweise Sitzrasenmäher bzw. Aufsitzrasenmähertraktoren auf der Reinigungsvorrichtung 1 positioniert werden können, ohne dass diese beschädigt oder verformt wird. Die Verbindung der Wannenoberseite 4 und der Wannenunterseite 5 erfolgt je nach Materialauswahl beispielsweise durch Verkleben oder Verschweißen der beiden Wannenteile.

Fig. 6 zeigt in einer Schnittansicht von der Seite die Reinigungswanne 2gemäß der in Fig. 5 eingezeichneten Schnittebene B-B. Im Profil sind dabei die verquetschten Verstärkungsrippen 14 deutlich zu erkennen. Weiters sind hier zwei im Wesentlichen parallel zueinander angeordnete Ablaufrinnen 15 vorgesehen, welche während der Reinigung zum Ableiten der Grasverunreinigungen von der Wannenoberseite 4 dienen.

Fig. 7 betrifft das in Fig. 6 markierte Detail C des Reinigungsmittelanschlusses 8 in einer vergrößerten Schnittansicht.

Fig. 8 veranschaulicht in einer Draufsicht eine weitere Ausführungsvariante einer erfindungsgemäßen Vorrichtung 1, bei der Ausströmöffnungen 7 vollflächig über einen Flächenabschnitt der Wannenoberseite 4 verteilt sind. Jede dieser Ausströmöffnungen 7 weist eine Ausströmdüse 16 auf, wodurch die Ausströmgeschwindigkeit des Reinigungsmittels erhöht und der Reinigungsmittelverbrauch vorteilhaft gesenkt wird. Zum Schutz vor Beschädigungen sind die Ausströmdüsen 16 jeweils innerhalb der Ausströmöffnungen 7 angeordnet. Vorteilhaft wird in dieser Ausführung von der Reinigungsvorrichtung 1 ein Messerraum an der Unterseite eines Rasenmähers besonders gleichmäßig und gründlich gereinigt.

Fig. 9 zeigt in einer Schnittansicht von der Seite diese Ausführung der Reinigungsvorrichtung 1 gemäß der in Fig. 8 eingezeichneten Schnittebene C-C.

### Liste der Positionszeichen:

- 1: Reinigungsvorrichtung
- 2: Reinigungswanne
- 3: Begrenzungsrandleiste
- 4: Wannenoberseite
- 5: Wannenunterseite
- 6: Reinigungsmittelkammer
- 7: Ausströmöffnung
- 8: Reinigungsmittelanschluss
- 9: Abschrägung
- 10: Reinigungsmittel (Wasser)
- 11: Wannenhöhe
- 12: Wannenlänge
- 13: Wannenbreite
- 14: Verstärkungsrippe
- 15: Ablaufrinne
- 16: Ausströmdüse

## Patentansprüche

1. Vorrichtung (1) zur Reinigung eines Rasenmähers, umfassend eine Reinigungswanne (2) zum Abstellen des Rasenmähers, wobei an einer Wannenoberseite (4) Ausströmöffnungen (7) für ein Reinigungsmittel (10) angeordnet sind, **dadurch gekennzeichnet, dass** die Ausströmöffnungen (7) mit einer in die Reinigungswanne (2) integrierten Reinigungsmittelkammer (6) an einer Wannenunterseite (5) verbunden sind.

2. Reinigungsvorrichtung (1) nach Anspruch 1, **dadurch gekennzeichnet, dass** die Reinigungsmittelkammer (6) mit einem Reinigungsmittelanschluss (8) verbunden ist.

3. Reinigungsvorrichtung (1) nach Anspruch 2, **dadurch gekennzeichnet, dass** der Reinigungsmittelanschluss (8) seitlich an der Reinigungswanne (2) hervorsteht.

4. Reinigungsvorrichtung (1) nach einem der Ansprüche 1 bis 3, **dadurch gekennzeichnet, dass** die Ausströmöffnungen (7) an der Wannenoberseite (4) im Wesentlichen linienförmig, vorzugsweise kreisförmig, angeordnet sind.

5. Reinigungsvorrichtung (1) nach einem der Ansprüche 1 bis 4, **dadurch gekennzeichnet, dass** die Ausströmöffnungen (7) in konzentrischen Kreisen an der Wannenoberseite (4) angeordnet sind.

6. Reinigungsvorrichtung (1) nach einem der Ansprüche 1 bis 3, **dadurch gekennzeichnet, dass** die Ausströmöffnungen (7) an zumindest einem Flächenabschnitt der Wannenoberseite (4) angeordnet sind.

7. Reinigungsvorrichtung (1) nach einem der Ansprüche 1 bis 6, **dadurch gekennzeichnet, dass** die Ausströmöffnungen (7) jeweils mit einer Ausströmdüse (16), vorzugsweise mit einer innenliegenden Ausströmdüse (16), ausgestattet sind.

8. Reinigungsvorrichtung (1) nach einem der Ansprüche 1 bis 7, **dadurch gekennzeichnet, dass** an der Wannenoberseite (4) der Reinigungswanne (2) zumindest an einem Seitenrand, bevorzugt an zumindest zwei gegenüberliegenden Seitenrändern, jeweils eine Begrenzungsrandleiste (3) vorgesehen ist.

9. Reinigungsvorrichtung (1) nach einem der Ansprüche 1 bis 8, **dadurch gekennzeichnet, dass** zumindest ein Seitenrand der Reinigungswanne (2) mit einer Abschrägung (9) versehen ist.

10. Reinigungsvorrichtung (1) nach einem der Ansprüche 1 bis 9, **dadurch gekennzeichnet, dass** die Wannenoberseite (4) und die Wannenunterseite (5) abschnittsweise aneinander anliegen.

11. Reinigungsvorrichtung (1) nach Anspruch 10, **dadurch gekennzeichnet, dass** die Wannenoberseite (4) und die Wannenunterseite (5) in den Abschnitten, in denen sie aneinander anliegen, miteinander verbunden sind.

12. Reinigungsvorrichtung (1) nach einem der Ansprüche 1 bis 11, **dadurch gekennzeichnet, dass** an der Wannenoberseite (4) zumindest eine Ablaufrinne (15) vorgesehen ist.

13. Reinigungsvorrichtung (1) nach einem der Ansprüche 1 bis 12, **dadurch gekennzeichnet, dass** eine Wannenhöhe (11) der Reinigungswanne (2) höchstens 50 mm, vorzugsweise höchstens 15 mm, beträgt.

14. Reinigungsvorrichtung (1) nach einem der Ansprüche 1 bis 13, hergestellt aus einem oder mehreren der folgenden Materialien:
Kunststoff, insbesondere Polyethylen (PE)-Kunststoff, faserverstärkter Kunststoff, insbesondere Glasfaserverstärktes Polyesterharz, Metall, Verbundwerkstoff.
